(19) Europäisches Patentamt
European Patent Office
Office européen des brevets

(11) **EP 2 188 661 B1**

(12) **EUROPÄISCHE PATENTSCHRIFT**

(45) Veröffentlichungstag und Bekanntmachung des Hinweises auf die Patenterteilung:
**30.07.2014   Patentblatt 2014/31**

(21) Anmeldenummer: **09727077.1**

(22) Anmeldetag: **25.03.2009**

(51) Int Cl.:
*G02B 21/36* (2006.01)        *G06T 5/50* (2006.01)
*H04N 5/235* (2006.01)

(86) Internationale Anmeldenummer:
**PCT/EP2009/053549**

(87) Internationale Veröffentlichungsnummer:
**WO 2009/121775 (08.10.2009 Gazette 2009/41)**

(54) **VERFAHREN UND BELEUCHTUNGSVORRICHTUNG ZUR OPTISCHEN KONTRASTVERSTÄRKUNG**

METHOD AND ILLUMINATION DEVICE FOR OPTICAL CONTRAST ENHANCEMENT

PROCÉDÉ ET DISPOSITIF D'ÉCLAIRAGE PERMETTANT UNE AMPLIFICATION DU CONTRASTE OPTIQUE

(84) Benannte Vertragsstaaten:
**AT BE BG CH CY CZ DE DK EE ES FI FR GB GR HR HU IE IS IT LI LT LU LV MC MK MT NL NO PL PT RO SE SI SK TR**

(30) Priorität: **01.04.2008   DE 102008000906**
**05.12.2008   DE 102008060475**

(43) Veröffentlichungstag der Anmeldung:
**26.05.2010   Patentblatt 2010/21**

(73) Patentinhaber: **Bauhaus-Universität Weimar**
**99423 Weimar (DE)**

(72) Erfinder:
• **BIMBER, Oliver**
**35394 Giessen (DE)**
• **IWAI, Daisuke**
**Kobe**
**Hyogo 6540141 (JP)**

(74) Vertreter: **Liedtke, Markus**
**Liedtke & Partner**
**Patentanwälte**
**Gerhart-Hauptmann-Strasse 10-11**
**99096 Erfurt (DE)**

(56) Entgegenhaltungen:
WO-A-03/016998        US-A1- 2004 196 550
US-A1- 2007 025 717        US-B1- 6 600 598

• F. BANTERLE ET AL.: "Inverse tone mapping", PROC. CONFERENCE ON COMPUTER GRAPHICS AND INTERACTIVE TECHNIQUES IN AUSTRALASIA AND SOUTHEAST ASIA, 2006, pages 349-356,

EP 2 188 661 B1

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

## Beschreibung

Die Erfindung betrifft ein Verfahren und eine Beleuchtungsvorrichtung zur optischen Kontrastverstärkung eines Objektes.

Dabei wird unter einer optischen Kontrastverstärkung eine Verstärkung visuell wahrnehmbarer und/oder messbarer optischer Kontraste verstanden.

Insbesondere betrifft die Erfindung die Darstellung von Bildern mit einem hohem Kontrastverhältnis, so genannten High Dynamic Range (HDR) Bildern (mit einer Bittiefe größer als 8). Derartige Bilder können beispielsweise von entsprechenden HDR-Kameras aufgenommen werden oder künstlich, z.B. als dreidimensionale Computergrafiken, hergestellt werden. Bisher existieren jedoch nur wenige Ausgabegeräte, die zur direkten Anzeige von HDR-Bildern fähig sind. Auf herkömmlichen Ausgabegeräten können HDR-Bilder nicht direkt dargestellt werden, sondern müssen mittels so genannter Tonemapping-Techniken (Dynamikkompressionstechniken), bei denen die Helligkeitskontraste eines HDR-Bildes verringert werden, in so genannte Low Dynamic Range (LDR) Bilder umgewandelt werden.

Es sind bereits unterschiedliche Ansätze bekannt, die Darstellung von HDR-Bildern mit Hilfe herkömmlicher Darstellungsmittel, beispielsweise LDR-Displays (LDR-Bildschirmen), zu verbessern.

Hier und im Folgenden wurde zur Vereinfachung der Beschreibung die weit verbreitete Konvention verwendet, begrifflich nicht zwischen einem Bild und einem ein Bild beschreibenden Datensatz zu unterschieden, sofern sich die jeweils verwendete Bedeutung des Begriffes "Bild" aus dem Zusammenhang erschließen lässt.

Erst vor kurzem wurden Displays zur Darstellung von HDR-Bildern eingeführt, welche Inhalte über eine Größenordnung von mehreren Zehnerpotenzen zwischen minimaler und maximaler Luminanz präsentieren können. In P. LEDDA. et al., 2003, "A wide field, high dynamic range, stereographic viewer", Proc. Conference on Computer Graphics and Interactive Techniques in Australasia and Southeast Asia, S. 237-244, ist beispielsweise ein passiv stereoskopischer HDR-Viewer beschrieben, der zwei übereinander gelagerte Transparenzfolien für jedes Auge zur Luminanzmodulierung anwendet und ein Kontrastverhältnis von 10.000:1 erreicht.

In H. SEETZEN et al., 2004, "High dynamic range display systems", Proc. ACM Siggraph, S. 760-768, werden aktive Displays beschrieben, die Bilder, welche auf einem Flüssigkristallbildschirm (LCD Panel) dargestellt werden, mit einer lokal variierenden Hintergrundbeleuchtung modulieren. Diese wird entweder von einem niedrigauflösenden LED-Panel (LED = Light Emitting Diode, Leuchtdiode) oder von einem hochauflösenden DLP-Projektor (DLP = Digital Light Processing) produziert, d.h. von einem Lichtprojektor mit einem matrixartigen Feld einzeln beweglicher Mikrospiegel zur Lichtprojektion. Es wurde dort von einem Kontrastverhältnis von über 50.000:1 zusammen mit einer Spitzenluminanz von 2.700 cd/m$^2$ (für die projektorbasierte Hintergrundbeleuchtung) berichtet.

Zahlreiche inverse Tonemapping-Techniken werden momentan entwickelt (z.B. F. BANTERLE et al., 2006, "Inverse tone mapping", Proc. Conference on Computer Graphics and Interactive Techniques in Australasia and Southeast Asia, S. 349-356), um existierende LDR-Bilder in ein HDR-Format zu konvertieren, das auf solchen Geräten betrachtet werden kann.

Allen aus den zuvor genannten Veröffentlichungen bekannten Ansätzen haften folgende Nachteile an: Erstens verwenden sie eine transmissive Bildmodulierung (entweder durch Transparenzfolien oder durch LCD/LcoS Panels, LcoS = Liquid Crystal on Silicon), leiden folglich unter relativ geringem Lichtdurchsatz und benötigen daher außergewöhnlich helle Hintergrundbeleuchtungen. Zweitens ist eines der beiden Modulierungsbilder von niedriger Auflösung und unscharf, um Artefakte wie Moiré-Muster durch Verschiebung der beiden Modulatoren zueinander zu vermeiden und um akzeptable Bildfrequenzen zu erzielen. Demnach können hohe Kontrastwerte nur mit der Auflösung des niederfrequenten Bildes erzielt werden. Drittens wird nur die Luminanz moduliert, da eines der beiden Bilder monochrom ist.

Spezialisierte Drucktechniken, welche filmlose Aufnahmen unterstützen, weisen etliche Möglichkeiten für viele medizinische und andere Berufsfelder auf. Verglichen mit konventionellen Hardcopymedien, wie zum Beispiel Röntgenfilm, bieten sie signifikante Kostenreduzierungen, längere Haltbarkeit (durch geringere Lichtempfindlichkeit) und farbliche Visualisierung. Sie stellen fast diagnostische Qualität bereit und haben eine viel höhere Auflösung als mit den meisten interaktiven Displays möglich wäre, aber erreichen nicht den hohen Kontrast, die Luminanz und wahrgenommene Tonauflösung von beispielsweise Röntgenfilm, der mit einem Lichtkasten betrachtet wird.

Neben der Darstellung von HDR-Bildern betrifft die Erfindung auch die kontrastverstärkende Darstellung von gewöhnlichen (LDR-) Bildern sowie von anderen Objekten, insbesondere von Objekten, die mit einem optischen Instrument, beispielsweise mit einem Lichtmikroskop oder Endoskop, abzubilden sind.

Aus DE 196 44 662 C2 ist eine Beleuchtungseinrichtung für ein Mikroskop bekannt, die einen Videoprojektor zur Objektbeleuchtung aufweist. Der Videoprojektor weist beispielsweise eine Flüssigkristallzelle auf oder ist als so genannter DLP-Projektor ausgeführt. Der Videoprojektor ist über einen Computer zur Realisierung unterschiedlicher Beleuchtungszustände der Objektbeleuchtung ansteuerbar.

Aus US 6,600,598 B 1 sind ein Verfahren zur optischen Kontrasterhöhung einer Probe unter Verwendung von Lichtbrechung sowie eine entsprechende Vorrichtung zum Betrachten einer Probe bekannt.

Aus US 2007/0025717 A1 sind ein Verfahren und ein System zur Erzeugung eines HDR-Bildes bekannt. Dabei werden unter verschiedenen Belichtungsverhältnissen aufgenommene Bilder einer Szene kombiniert, um ein HDR-Bild zu erzeugen.

Aus WO 03/016998 A1 sind eine Vorrichtung und ein Verfahren zur Bilderzeugung bekannt, bei denen ein erstes Bild durch eine Projektionsvorrichtung in ein mittels einer Anzeigeeinheit, beispielsweise eines LCD, dargestelltes zweites Bild projiziert wird.

US 2004/0196550 A1 offenbart eine Beleuchtungsvorrichtung für ein Mikroskop, die eine digitale Mikrospiegelvorrichtung enthält, mittels derer auswählbare Bereiche eines Objektes beleuchtbar sind. Die Beleuchtungsvorrichtung umfasst ferner eine Kamera zur Aufnahme von Kamerabildern des Objektes und eine Steuereinheit zur Steuerung der Mikrospiegelvorrichtung.

Der Erfindung liegt die Aufgabe zu Grunde, ein verbessertes Verfahren und eine verbesserte Vorrichtung zur optischen Kontrastverstärkung eines Objektes anzugeben, wobei das Objekt insbesondere ein Bild sein kann.

Die Aufgabe wird erfindungsgemäß hinsichtlich des Verfahrens durch die in Anspruch 1 angegebenen Merkmale und hinsichtlich der Vorrichtung durch die in Anspruch 9 angegebenen Merkmale gelöst.

Vorteilhafte Ausgestaltungen der Erfindung sind Gegenstand der Unteransprüche.

Bei dem erfindungsgemäßen Verfahren werden optische Kontraste eines Objektes durch eine räumlich und/oder zeitlich modulierte Beleuchtung des Objektes mittels wenigstens einer Lichtprojektionseinheit verstärkt. Dabei wird die räumliche und/oder zeitliche Modulierung der Beleuchtung des Objektes anhand eines dem Objekt zugeordneten Bilddatensatzes bestimmt.

Unter einer Lichtprojektionseinheit wird dabei eine Projektionseinheit verstanden, mittels derer elektromagnetische Strahlung aussendbar ist. Die Bezeichnung ist dabei nicht auf elektromagnetische Strahlung mit Wellenlängen vorwiegend im sichtbaren Bereich oder mit einem weißlichtähnlichen Spektrum beschränkt. Sie schließt somit Projektionseinheiten ein, die elektromagnetische Strahlung mit Wellenlängen im nicht sichtbaren Bereich und/oder mit einem von einem weißlichtähnlichen Spektrum abweichenden Spektrum aussenden.

Die Erfindung nutzt dabei aus, dass sich optische Kontraste eines Objektes durch eine modulierte Beleuchtung des Objektes verstärken lassen. Die Modulierung anhand eines Bilddatensatzes erlaubt dabei vorteilhaft einerseits, kontrastarme Bereiche des Objektes anhand der Bilddaten zu ermitteln, und andererseits, eine Lichtprojektionseinheit anhand der Bilddaten zu steuern, wobei die Bilddaten zur Kontrastverstärkung bearbeitet werden. Auf diese Weise realisiert das erfindungsgemäße Verfahren eine einfache und kostengünstige Methode zur Kontrastverstärkung mit preiswerten und weit verbreiteten Darstellungsgeräten. Insbesondere erfordert das Verfahren keine kostspieligen direkt HDR-fähigen Ausgabegeräte zur Darstellung von HDR-Bildern.

Durch die modulierte kontrastverstärkende Beleuchtung des Objektes kann insbesondere ein optisches Signal-Rausch-Verhältnis bereits vor einer Aufnahme oder Darstellung des Objektes erhöht werden. Eine derartige Erhöhung des Signal-Rausch-Verhältnisses kann vorteilhaft verwendet werden sowohl in Anwendungen, bei denen das Objekt direkt oder mittels eines optischen Instrumentes wie eines Mikroskops oder Endoskops betrachtet wird, als auch in Anwendungen, in denen eine Bildverarbeitung eines von dem Objekt aufgenommenen Bildes vorgenommen wird.

Das beleuchtete Objekt kann dabei zweidimensional sein, beispielsweise ein ausgedrucktes oder auf einem Bildschirm dargestelltes oder auf eine Projektionsfläche projiziertes Bild, oder es kann ein dreidimensionales Objekt sein, beispielsweise ein mittels eines optischen Instrumentes wie eines Lichtmikroskopes oder Endoskopes abzubildendes Objekt.

Die Beleuchtung des Objektes kann reflektiv, d.h. als Auflichtbeleuchtung, und/oder transmissiv, d.h. als Durchlichtbeleuchtung, ausgeführt werden. Eine transmissive Beleuchtung eignet sich für hinreichend lichtdurchlässige Objekte, beispielsweise für transparente Röntgenbilder oder für in Durchlichtmikroskopie zu mikroskopierende Objekte. Für derartige Objekte ist das Verfahren insbesondere vorteilhaft gleichzeitig mit einer reflektiven und einer transmissiven Beleuchtung durchführbar, beispielsweise mit jeweils einer Lichtprojektionseinheit für Auflichtbeleuchtung und Durchlichtbeleuchtung.

Gemäß einer ersten Ausführungsform, die weiter unten detailliert beschrieben wird, werden sowohl das Objekt selbst als auch der Bilddatensatz aus einem Ursprungsbild erzeugt, das insbesondere als ein HDR-Datensatz vorliegen kann. Dazu wird als Objekt aus dem Ursprungsbild ein erstes Bild ermittelt und mittels eines Bilddarstellungsmittels dargestellt. Der Bilddatensatz wird aus dem Ursprungsbild als ein zweites Bild ermittelt, das deckungsgleich auf das erste Bild zu dessen Kontrastverstärkung projiziert wird. Dabei weisen das erste und das zweite Bild jeweils einen geringeren Kontrastumfang als das Ursprungsbild und als ein sich aus ihrer Überlagerung ergebendes Gesamtbild auf.

Das Kontrastverhältnis des ersten Bildes ist dabei durch ein von dem Bilddarstellungsmittel darstellbares Kontrastverhältnis begrenzt. Das Bilddarstellungsmittel ist beispielsweise ein Drucker, mit dem das erste Bild ausgedruckt wird, oder so genanntes elektronisches Papier, d.h. ein spezielles Display zur Dokumentenanzeige, auf dem das erste Bild dargestellt wird. Durch die Projektion des zweiten Bildes auf das erste Bild wird das erste Bild vorteilhaft kontrastverstärkend moduliert. Auf diese Weise wird durch die Überlagerung der beiden Bilder ein Gesamtbild erzeugt, dessen Kontrastverhältnis das von dem Bilddarstellungsmittel darstellbare Kontrastverhältnis deutlich übertreffen kann. Dabei kann das erste Bild insbesondere ein reflektiv dargestelltes Bild sein, d.h. ein Bild, das durch von ihm reflektiertes Licht erfasst wird.

Diese Ausführungsform eignet sich in besonderem Maße zur Darstellung von HDR-Ursprungsbildern ohne kostspielige HDR-Ausgabegeräte und bietet somit eine preiswerte Alternative zur Darstellung von HDR-Ursprungsbildern auf Gebieten, die mit derartigen Ursprungsbildern arbeiten, wie beispielsweise der Radiologie und anderer medizinischen Bereiche oder der Astronomie. Insbesondere ermöglicht das Verfahren eine kontrastreiche Darstellung von HDR-Ursprungsbildern als Hardcopies auf Fotopapier oder mittels elektronischen Papiers, wobei die Verwendung von elektronischem Papier auch interaktive Visualisierungen ermöglicht.

Experimente haben ergeben, dass dabei Kontrastverhältnisse von über 45.000:1 mit einer Spitzenluminanz von mehr als 2.750 cd/m$^2$ erreichbar und technisch mehr als 620 perzeptiv unterscheidbare Tonwerte reproduzierbar sind. Darüber hinaus konnten Farbraumerweiterungen bis zu einem Faktor von 1,4 verglichen mit einer regulären Projektion oder einem Faktor von 3,3 verglichen mit regulären Hardcopydrucken erzielt werden. Dadurch kann die Auflösung der Hardcopy mehrere tausend dpi betragen, während Luminanz und Chrominanz mit einem Registrierungsfehler von weniger als 0,3 mm moduliert werden.

Eine zweite Ausführungsform des erfindungsgemäßen Verfahrens sieht vor, dass der Bilddatensatz, anhand dessen die Modulierung der Beleuchtung des Objektes ermittelt wird, aus einem mittels einer Kamera aufgenommenen Kamerabild des Objektes gebildet wird. Dabei wird aus dem Bilddatensatz ein Beleuchtungsdatensatz zur Steuerung einer Lichtprojektionseinheit erzeugt.

Bei dieser Ausführungsform wird der Bilddatensatz also nicht aus einem bereits vorhandenen Ursprungsbild erzeugt, sondern aus einem mittels einer Kamera aufgenommenen Kamerabild des Objektes. Aus dem Bilddatensatz wird dann ein Beleuchtungsdatensatz erzeugt, mittels dessen die Lichtprojektionseinheit zur kontrastverstärkenden Beleuchtung des Objektes gesteuert wird. Dies ermöglicht vorteilhaft eine erfindungsgemäße Kontrastverstärkung auch in Fällen, in denen kein Ursprungsbild, insbesondere kein HDR-Ursprungsbild, vorliegt.

Dabei wird aus dem Bilddatensatz vorzugsweise zunächst mittels eines inversen Tonemappings ein Zwischenbild mit einem gegenüber dem Kamerabild erhöhten Kontrastverhältnis gebildet und dann der Beleuchtungsdatensatz aus dem Zwischenbild erzeugt.

Das Zwischenbild übernimmt in diesem Fall die Rolle des Ursprungsbildes der ersten Ausführungsform des Verfahrens. Der Beleuchtungsdatensatz übernimmt die Rolle des zweiten Bildes der ersten Ausführungsform. Dadurch können die Vorteile der ersten Ausführungsform des Verfahrens auch in Fällen genutzt werden, in denen kein (HDR-) Ursprungsbild zur Verfügung steht.

Der Beleuchtungsdatensatz kann insbesondere ein zweites Bild des Objektes sein und deckungsgleich auf das Objekt projiziert werden.

Das Objekt kann dabei ein LDR-Bild, beispielsweise eine normale Fotografie, oder ein anderes Objekt, beispielsweise ein mittels eines optischen Instrumentes wie eines Lichtmikroskopes oder Endoskopes abzubildendes dreidimensionales Objekt, sein.

In einer bevorzugten Weitergestaltung der zweiten Ausführungsform werden aus dem Bilddatensatz lokale Kontrastwerte ermittelt und in als kontrastarm erkannten Teilbereichen des Objektes Kontraste durch eine Regelung der Beleuchtungscharakteristik der wenigstens einen Lichtprojektionseinheit anhand des Beleuchtungsdatensatzes lokal erhöht.

Unter der Beleuchtungscharakteristik einer Lichtprojektionseinheit wird dabei die räumliche und zeitliche Intensitäts- und Spektralverteilung einer von der Lichtprojektionseinheit ausgesendeten elektromagnetischen Strahlung verstanden.

Die lokale Erhöhung der Kontraste wird dabei beispielsweise durch eine lokale Erhöhung der Beleuchtungsstärke und/oder eine lokale Änderung der Beleuchtungsfarbe erreicht. Dadurch kann die Qualität der Abbildung des Objektes in kontrastarmen Teilbereichen durch eine Kontrastverstärkung und insbesondere durch eine lokale Kontrastoptimierung verbessert werden. Insbesondere kann die Kontrastregelung der menschlichen visuellen Wahrnehmung durch eine dieser entsprechenden Regelung lokaler Kontraste angepasst werden, so dass die Regelung eine Erhöhung lokal wahrgenommener Kontraste bewirkt.

Alternativ oder zusätzlich werden aus dem Bilddatensatz vorzugsweise Bildparameter zur Erkennung von durch Lichtreflexion an dem Objekt erzeugten Glanzlichtern ermittelt, und ermittelten Glanzlichtern wird durch die Regelung der Beleuchtungscharakteristik der wenigstens einen Lichtprojektionseinheit entgegengewirkt.

Dabei wird unter einem Glanzlicht eine spekulare (spiegelnde) Rückreflexion von Licht an einem Oberflächenbereich des Objektes verstanden. Geeignete Bildparameter zur Erkennung von Glanzlichtern sind beispielsweise lokale Helligkeiten des Objektes.

Dabei wird Glanzlichtern beispielsweise dadurch entgegengewirkt, dass die Beleuchtungsstärke in Teilbereichen des Objektes, in denen Glanzlichter erkannt werden, reduziert wird. Insbesondere kann die Beleuchtungsstärke wellenlängenabhängig reduziert werden, wenn die erkannten Glanzlichter eine bestimmte Farbe aufweisen. Wird beispielsweise in einem Teilbereich des Objektes ein rotes Glanzlicht erkannt, dann wird in diesem Teilbereich der Rot-Anteil der Beleuchtung reduziert. Dadurch wird die Lichtstärke von Glanzlichtern in den Abbildungen des Objektes und damit eine Beeinträchtigung der Qualität der Abbildung durch Glanzlichter vorteilhaft reduziert.

In einer weiteren bevorzugten Ausgestaltung des Verfahrens werden zusätzlich oder alternativ Bildparameter zur Erkennung von Volumenstreuungen von von der wenigstens einen Lichtprojektionseinheit ausgesendetem Licht ermittelt, und erkannten Volumenstreuungen wird durch die Regelung der Beleuchtungscharakteristik der wenigstens einen Lichtprojektionseinheit entgegenwirkt.

Unter einer Volumenstreuung von Licht wird dabei die Streuung von Licht verstanden, das in das Objekt eindringt und innerhalb des Objektes gestreut wird, bevor es wieder aus dem Objekt austritt.

Volumenstreuungen können die Qualität der Abbildung eines Objektes, insbesondere lokale Kontraste der Abbildung, erheblich reduzieren, indem sie Licht innerhalb des Objektes verteilen und dadurch insbesondere einer räumlichen und zeitlichen Modulation der Beleuchtungscharakteristik der wenigstens einen Lichtprojektionseinheit entgegenwirken. Durch die Erkennung und Reduzierung von Volumenstreuungen wird somit die Effektivität der Modulation der Beleuchtungscharakteristik gesteigert und die Qualität der Abbildung des Objektes, insbesondere hinsichtlich deren lokalen Kontrasten, verbessert.

Als Bildparameter zur Erkennung von Volumenstreuungen eignen sich, in Abhängigkeit von den spezifischen Eigenschaften des Objektes, beispielsweise Punktspreizfunktionen, Modulationsübertragungsfunktionen oder Matrixelemente einer Lichttransportmatrix der Beleuchtungsvorrichtung, die jeweils bei mehrfacher Beleuchtung des Objektes mit verschiedenen Beleuchtungsmustern der wenigstens einen Lichtprojektionseinheit ermittelt werden. Unter einer Lichttransportmatrix wird dabei eine Matrix verstanden, die den so genannten Lichttransport zwischen einer Lichtprojektionseinheit und der Kamera beschreibt, indem sie einen Zusammenhang eines von der Lichtprojektionseinheit ausgesendeten Beleuchtungsmusters mit den zugehörigen von der Kamera erfassten Bilddaten herstellt. vgl. z.B. P. Sen et al., "Dual Photography", ACM Trans. Graph. 24, 3, S. 745-755.

Derartige Bildparameter eignen sich zur Erkennung von Volumenstreuungen, da sie eine lokale Verteilung punktuell ausgesendeten Lichts nach dessen Modulation durch das Objekt erkennen lassen, die von Volumenstreuungen abhängt. Insbesondere ist eine derartige Verteilung umso ausgedehnter, je mehr Volumenstreuungen auftreten. Somit können mittels derartiger Bildparameter Teilbereiche des Objektes ermittelt werden, in denen Volumenstreuungen vermehrt auftreten.

Erkannten Volumenstreuungen kann beispielsweise dadurch entgegengewirkt werden, dass eine von einer Lichtprojektionseinheit erzeugte Beleuchtungsstärke in diesen Teilbereichen lokal reduziert wird. Ferner kann die Beleuchtungsstärke insbesondere vorteilhaft wellenlängenabhängig reduziert werden, wenn wellenlängenabhängige Volumenstreuungen erkannt werden.

Dadurch werden Teilbereiche des Objektes, in denen Volumenstreuungen vermehrt auftreten, weniger stark und gegebenenfalls wellenlängenabhängig beleuchtet als andere Bereiche des Objektes und somit Volumenstreuungen und deren nachteilige Auswirkungen auf die Qualität der Abbildung des Objektes vorteilhaft reduziert.

In einer weiteren Ausgestaltung des Verfahrens werden Bildparameter zur Auswahl wenigstens eines Bildsegmentes der Abbildung des Objektes ermittelt. Durch die Regelung der Beleuchtungscharakteristik der wenigstens einen Lichtprojektionseinheit wird wenigstens ein einem ermittelten Bildsegment entsprechender Teilbereich des Objektes durch eine lokale Änderung der Beleuchtungsstärke und/oder Beleuchtungsfarbe hervorgehoben oder ausgeblendet.

Dabei wird ein Teilbereich als ausgeblendet bezeichnet, der nicht oder im Vergleich zu anderen Bereichen deutlich weniger stark beleuchtet wird.

Durch eine Hervorhebung kann ein besonders interessanter Teilbereich des Objektes vorteilhaft visuell betont werden, so dass ein Betrachter der Abbildung des Objektes auf diesen Teilbereich hingewiesen wird. Durch eine Ausblendung können nicht relevante Teilbereich des Objektes verborgen werden und die Aufmerksamkeit des Betrachters kann vorteilhaft auf die wesentlichen Teilbereiche des Objektes gerichtet werden. Derartige Hervorhebungen oder Ausblendungen können vorteilhaft beispielsweise in Assistenzsystemen bei chirurgischen Operationen angewendet werden, um die Bildauswahl auf für eine jeweilige Operation relevante Teilbereiche des Objektes zu konzentrieren.

Die Kamera wird dabei in einem Strahlengang von der wenigstens einen Lichtprojektionseinheit ausgesendeten Lichts bevorzugt derart angeordnet, dass sie von dem Objekt reflektiertes oder durch das Objekt transmittiertes Licht empfängt.

Unter durch das Objekt transmittiertem Licht wird Licht verstanden, das durch das Objekt hindurch tritt und in annähernd derselben Richtung in das Objekt eintritt und aus ihm austritt.

Eine Anordnung der Kamera, in der sie von dem Objekt reflektiertes Licht empfängt, ist dann bevorzugt, wenn das Objekt durch von dem Objekt reflektiertes Licht betrachtet wird, beispielsweise bei einer Betrachtung des Objektes mittels eines Auflichtmikroskops. Entsprechend ist eine Anordnung der Kamera, in der sie durch das Objekt transmittiertes Licht empfängt, bei Betrachtungen des Objektes durch durch das Objekt transmittiertes Licht bevorzugt. Durch eine solche der Betrachtung des Objektes angepasste Anordnung der Kamera kann der mittels der Kamera ermittelte Bilddatensatz besonders vorteilhaft zur Regelung der Beleuchtungscharakteristik einer Lichtprojektionseinheit verwendet werden.

Eine erfindungsgemäße Beleuchtungsvorrichtung zur optischen Kontrastverstärkung eines Objektes umfasst wenigstens eine Lichtprojektionseinheit, deren Beleuchtungscharakteristik räumlich und/oder zeitlich modulierbar ist, und eine Steuereinheit zur Modulierung der Beleuchtungscharakteristik der wenigstens einen Lichtprojektionseinheit anhand eines dem Objekt zugeordneten Bilddatensatzes.

Dies ermöglicht vorteilhaft die Modulierung der Beleuchtung des Objektes gemäß dem erfindungsgemäßen Verfahrens mit den oben genannten Vorteilen.

Vorzugsweise umfasst die Beleuchtungsvorrichtung ferner eine an die Steuereinheit gekoppelte Kamera, mittels derer ein Kamerabild des Objektes zur Bildung des Bilddatensatzes aufnehmbar ist.

Dies ermöglicht vorteilhaft die Durchführung der oben beschriebenen zweiten Ausführungsform des erfindungsgemäßen Verfahrens. Ferner kann die Kamera vorteilhaft zur Kalibrierung der wenigstens einen Lichtprojektionseinheit eingesetzt werden.

Die Kamera ist dabei bevorzugt in einem Strahlengang von der wenigstens einen Lichtprojektionseinheit ausgesendeten Lichts derart angeordnet, dass sie von dem Objekt reflektiertes oder durch das Objekt transmittiertes Licht empfängt.

Weitere Vorteile, Merkmale und Einzelheiten der Erfindung werden im Folgenden anhand von Ausführungsbeispielen unter Bezugnahme auf Zeichnungen beschrieben.

Darin zeigen:

Figur 1    eine Beleuchtungsvorrichtung zur kontrastverstärkenden Beleuchtung eines Objektes,

Figur 2    schematisch eine Beleuchtungsvorrichtung für ein Lichtmikroskop für Auflichtmikroskopie,

Figur 3    ein Lichtmikroskop mit einer Beleuchtungsvorrichtung für Auflichtmikroskopie,

Figur 4    schematisch eine räumlich modulierte Auflichtbeleuchtung eines zu mikroskopierenden Objektes,

Figur 5    schematisch eine Beleuchtungsvorrichtung für ein Lichtmikroskop für Durchlichtmikroskopie,

Figur 6    ein Lichtmikroskop mit einer Beleuchtungsvorrichtung für Durchlichtmikroskopie, und

Figur 7    schematisch eine räumlich modulierte Durchlichtbeleuchtung eines zu mikroskopierenden Objektes.

Einander entsprechende Teile sind in allen Figuren mit den gleichen Bezugszeichen versehen.

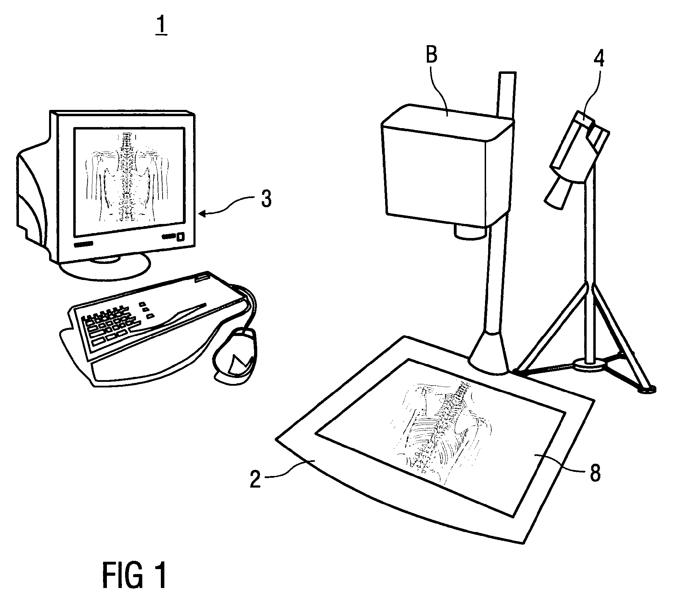

**Figur 1** zeigt eine Beleuchtungsvorrichtung 1 zur kontrastverstärkenden Beleuchtung eines Objektes 8. Die Beleuchtungsvorrichtung 1 umfasst eine digitale Lichtprojektionseinheit B, deren Beleuchtungscharakteristik räumlich und zeitlich modulierbar ist, eine Steuereinheit 3 zur Modulierung der Beleuchtungscharakteristik der Lichtprojektionseinheit B und eine digitale Kamera 4.

Das Objekt 8 ist ein auf einem Fotopapier gedrucktes erstes Bild $I_A$, welches auf einer Projektionsfläche 2 aufgespannt ist. Der Ausdruck des ersten Bildes $I_A$ wird im Folgenden auch als Hardcopy bezeichnet. Als Projektionsfläche 2 kann ein Tablett verwendet werden, das für spekulare Fotografien optional ein wenig gekippt werden kann, um Glanzlichter vom Betrachter weg zu lenken. Alternativ kann das erste Bild $I_A$ beispielsweise auf einem elektronischen Papier dargestellt werden. Dieses erlaubt auch das Anzeigen von interaktiven Inhalten.

Die Lichtprojektionseinheit B ist beispielsweise als ein DLP- oder GLV-Projektor ausgebildet (GLV = Grating Light Valve) und projiziert ein zweites Bild $I_B$ auf das erste Bild $I_A$, um Letzteres zur Kontrastverstärkung zu modulieren.

Mit der Kamera 4 wird ein Kamerabild des Objektes aufgenommen. Mit Hilfe des Kamerabildes wird die Beleuchtungsvorrichtung 1 anfänglich kalibriert, wobei eine Registrierung der Bilder $I_A$, $I_B$ ausgeführt wird.

Die Steuereinheit 3 ist als ein Computer ausgebildet, mittels dessen insbesondere die Lichtprojektionseinheit B gesteuert, das Kamerabild ausgewertet und die Beleuchtungsvorrichtung 1 kalibriert wird.

**Geometrische Registrierung:** Eine präzise geometrische Registrierung zwischen der Lichtprojektionseinheit B und dem ersten Bild $I_A$ ist essentiell, damit dessen Überlagerung mit dem zweiten Bild $I_B$ nicht zu Darstellungsfehlern führt. Nachfolgend werden drei automatische Registrierungsmethoden für verschiedene Situationen beschrieben:

**1) Homographie:** Zu Beginn wird eine Homographie zwischen der Kamera 4 und der Lichtprojektionseinheit B über die Projektionsfläche 2 gemessen. Das erste Bild $I_A$ wird mit einem Rand gedruckt, welcher eine zuverlässige Detektion der Eckpunkte des ersten Bildes $I_A$ in der Kameraperspektive erlaubt. Eine Homographiematrix erlaubt zusammen mit den Eckpunkten eine Transformation aller Kamerapixel in die Perspektive der Lichtprojektionseinheit B und ihre präzise Registrierung auf den korrespondierenden Pixeln des ersten Bildes $I_A$. Für eine wirkungsvolle Homographie muss die Hardcopy völlig planar sein. Dies wird erreicht, indem sie flach auf der Projektionsfläche 2 festgeklemmt wird, oder durch den Einsatz von professionellen Vakuumtischen.

Der gedruckte Rand sowie die vorausgesetzte Planarität der Hardcopy stellen Einschränkungen dar, die nur von manchen Applikationen erfüllt werden können, während andere mehr Flexibilität erfordern. Bilder, die auf Fotopapier gedruckt wurden, sind normalerweise nie vollkommen flach. Weiterhin können Teile eines Originalbildes während eines Reformatierungsprozesses eines Druckers abgeschnitten werden und Bildteile am Rand nicht auf der Hardcopy erscheinen. In solchen Fällen wird eine einfache Registrierung über Homographie und Eckpunkte nicht ausreichend sein. Angenommen, die Hardcopy ist von beliebiger Form, enthält aber keine geometrischen (aber möglicherweise radiometrische) Unstetigkeiten, so kann die nachfolgend beschriebene Registrierungstechnik angewandt werden.

**2) Strukturiertes Licht:** Techniken mit strukturiertem Licht (z.B. so genannte Gray Codes) können verwendet werden, um Pixelkorrespondenzen zwischen der Kamera 4 und der Lichtprojektionseinheit B über eine nichtplanare Hardcopyoberfläche zu messen. Dies muss jedoch für nicht uniform gefärbte und dunkle O-berflächenportionen, die eine große Menge des projizierten Lichtes absorbieren, robust sein. Darüber hinaus ist eine Methode vorteilhaft, welche das Aufnehmen einer möglichst geringen Anzahl von Bildern für die Registrierung erfordert, um sowohl den Kalibrierungsprozess zu beschleunigen als auch eine Überbeanspruchung mechanischer Teile zu verhindern, insbesondere falls die Kamera 4 beispielsweise als eine digitale Spiegelreflexkamera ausgebildet ist.

Eine bevorzugte Vorgehensweise erfordert das Aufnehmen von nur drei Bildern. Zwei dieser Bilder stellen horizontale und vertikale Rasterlinien sowie einen farbkodierten absoluten Referenzpunkt im Rasterzentrum dar. Das dritte Bild ist ein Weißlichtbild der Hardcopy, das von der Kamera 4 unter einer projizierten weißen Beleuchtung aufgenommen wird. Die beiden Rasterbilder werden zur Normierung durch das Weißlichtbild geteilt und die Resultate werden mit einem Schwellwert verglichen und binarisiert. Die Linien sowie der Referenzpunkt werden durch Labeling und Linienverfolgung wiederhergestellt und Schnittpunkte zwischen verbundenen Liniensegmenten detektiert. Die Schnittpunkte werden relativ zu den absoluten Koordinaten des Referenzpunktes trianguliert und dazwischen liegende Projektor-Kamera-Korrespondenzen der Kamera 4 und der Lichtprojektionseinheit B interpoliert. Dadurch hängt die Präzision dieser Technik hauptsächlich von der angepassten Rasterauflösung und dem Krümmungsgrad der Hardcopy ab.

Bei den zuvor genannten Registrierungsmethoden "Homographie" und "Strukturiertes Licht" liegen Fehlregistrierungen normalerweise unter 0,3 mm.

So genannte Featurepunkte werden im aufgenommenen Kamerabild der Hardcopy erkannt und Bildmerkmalen des erste Bildes $I_A$ zugewiesen (nähere Angaben dazu finden sich in V. LEPETIT et al., 2006, "Keypoint recognition using randomized trees", IEEE Trans. on Pattern Analysis Machine Intelligence 28, 9, S. 1465-1479). Alle zugewiesenen Featurepunkte werden trianguliert, und fehlende Korrespondenzen innerhalb und außerhalb der konvexen Hülle des konstruierten Triangulierungsnetzes werden interpoliert bzw. extrapoliert. Eine resultierende Lookup-Tabelle liefert Pixelkorrespondenzen zwischen der Hardcopy und dem ersten Bild $I_A$, welche in Kombination mit den Projektor-Kamera-Korrespondenzen (ermittelt entweder durch Homographie und Eckpunkte oder gemessen über strukturiertes Licht) dazu verwendet werden können, Pixel der Lichtprojektionseinheit B mit den korrespondierenden Pixeln des ersten Bildes $I_A$ in Verbindung zu stellen. Die Präzision derartiger featurebasierter Registrierungstechniken hängt sehr stark von der Anzahl und der Verteilung der erkannten Featurepunkten und folglich vom Bildinhalt ab.

**4) Koaxiale Ausrichtung der Kamera 4 und der Lichtprojektionseinheit B:** Bei einer koaxialen Ausrichtung der Kamera 4 und der Lichtprojektionseinheit B vereinfacht sich die Registrierung, da keine Pixel-Korrespondenzen zwischen der Kamera 4 und der Lichtprojektionseinheit B ermittelt werden müssen.

**Photometrische Kalibrierung:** Unabhängig von der verwendeten Registrierungsmethode werden für die Ausführung der hier beschriebenen Erfindung die linearisierten Transferfunktionen der Lichtprojektionseinheit B und der Kamera 4 benötigt, die für jeden Geräteaufbau durch eine photometrische Kalibrierung ermittelt werden. Die Kamera 4 wird z.B. mit einem Spektroradiometer kalibriert, um korrekte Luminanz- und Chrominanzwerte zu liefern. Des Weiteren müssen der nichtlineare Lichtabfall und der Beitrag der Umgebung (inklusive dem Blacklevel der Lichtprojektionseinheit B) auf der Projektionsfläche 2 sowie die stattfindende Farbkanalvermischung zwischen der Kamera 4 und der Lichtprojektionseinheit B gemessen und für alle projizierten und aufgenommenen Bilder kompensiert werden. Um dies zu erreichen, können etablierte Techniken zur photometrischen Kalibrierung von Projektor-Kamera Systemen verwendet werden. Details dieser Techniken werden zusammengefasst in M. BROWN et al., 2005, "Camera Based Calibration Techniques for Seamless Multi-Projector Displays", IEEE Trans. on Visualization and Computer Graphics 11, 2, S. 193- 5 206; sowie in O. BIMBER et al., 2007, "The Visual Computing of Projector-Camera Systems", Proc. Eurographics (State-of-the-Art Report), S. 23-46. Falls eine Lichtprojektionseinheit B mit Pulsmodulation verwendet werden, muss die Bildwiederholrate der Projektion immer ein ganzzahliges Vielfaches der Belichtungszeit der Kamera 4 sein, um die korrekte Integration über alle Farben und Intensitäten zu gewährleisten. Zum Zweck der Anzeige kann jedoch eine beliebige Wiederholrate gewählt werden. Informationen zur photometrischen Korrektur von Hardcopygeräten werden, zusammen mit individuellen Renderingtechniken, in den folgenden Abschnitten beschrieben.

**Aufspalten eines Ursprungsbildes** $I_{HDR}$: Wie bereits oben kurz dargestellt wurde, werden das erste Bild $I_A$ und das zweite Bild $I_B$ bei einer ersten Ausführungsform des erfindungsgemäßen Verfahrens aus einem Ursprungsbild $I_{HDR}$ gewonnen. Diese Erzeugung der Bilder $I_A$, $I_B$ wird im Folgenden auch als Aufspalten des Ursprungsbildes $I_{HDR}$ bezeichnet. Insbesondere wenn das Ursprungsbild $I_{HDR}$ in Form eines HDR-Datensatzes vorliegt, werden die beiden Bilder $I_A$, $I_B$ aus dem Ursprungsbild $I_{HDR}$ bevorzugt nach folgender Berechnungsvorschrift erzeugt:

$$I_A = TM_{AB}(I_{HDR})^{\gamma \frac{a}{a+b}} \ , \qquad\qquad [1]$$

$$I_B = TM_{AB}(I_{HDR})^{\gamma} / T_A(I_A) \ , \qquad\qquad [2]$$

wobei folgende Bezeichnungen verwendet werden:

$TM_{AB}$ : Tonemapping-Operator (Dynamikkompressionsoperator);
$T_A$ : linearisierte Transferfunktion des Bilddarstellungsmittels A;
$a$ : Bittiefe des Bilddarstellungsmittels A;
$b$ : Bittiefe der Lichtprojektionseinheit B;
$\gamma$ : Gammakorrekturwert.

Erfindungsgemäß wird das erste Bild $I_A$ mittels eines Bilddarstellungsmittels A, beispielsweise eines Druckers oder elektronischen Papiers, dargestellt, und das zweite Bild $I_B$ wird von der Lichtprojektionseinheit B auf das erste Bild $I_A$ projiziert. Dabei ist das Bilddarstellungsmittel A ein Gerät mit einer im Vergleich zu der Lichtprojektionseinheit B möglicherweise deutlich geringeren Bildqualität bezüglich Tonauflösung und Auflösung, Farbraum, Banding- und Ditheringeffekten.

Mittels des Tonemapping-Operators $TM_{AB}$ wird das Ursprungsbild $I_{HDR}$ auf eine Tonauflösung und eine Farbskala eines Gesamtbildes abgebildet, das durch die Überlagerung des ersten Bildes $I_A$ mit dem zweiten Bild $I_B$ entsteht.

Mittels Gleichung [1] wird das erste Bild $I_A$ für das Bilddarstellungsmittel A mit dessen Bittiefe $a$ ermittelt. Artefakte (Bildfehler), die bei der Darstellung (Anzeige oder Druck) des ersten Bildes $I_A$ entstehen, werden mit dem zweiten Bild $I_B$ kompensiert, das gemäß Gleichung [2] erzeugt wird.

Dabei bezeichnet in Gleichung [2] $T_A$ eine linearisierte Transferfunktion des Bilddarstellungsmittels A, die eine Simulation des Aussehens des ersten Bildes $I_A$ erlaubt, unter Berücksichtigung des eigentlichen Farbraums des Bilddarstellungsmittels A, der Tonauflösung und Auflösung und möglichen räumlichen Artefakten, die durch Banding oder Dithering entstanden sind.

Im Folgenden werden mehrere Aufspaltungskonventionen angegeben, die die Bildqualität abhängig von den Fähigkeiten des Bilddarstellungsmittels A und der Lichtprojektionseinheit B verbessern.

Generell ist es vorteilhaft, eine Lichtprojektionseinheit B zu verwenden, die eine höhere Bildqualität darstellen kann als das Bilddarstellungsmittel A. Dies erlaubt es nämlich, Artefakte im ersten Bild $I_A$ so effizient wie möglich mit dem zweiten zweiten Bild $I_B$ zu kompensieren.

Wenn sowohl das Bilddarstellungsmittel A als auch die Lichtprojektionseinheit B Farben anzeigen können, ist es zweckmäßig, sowohl das Aufspalten des Ursprungsbildes $I_{HDR}$ als auch die Kompensierung der Artefakte im RGB-Farbraum (Farbraum mit den Primärfarben rot, grün und blau) auszuführen (und nicht im Luminanzraum gefolgt von einer Rekombinierung). Dadurch lassen sich Clippingartefakte während der Kompensierung vermeiden.

Falls das Bilddarstellungsmittel A (als Gerät mit niedriger Qualität) nur Graustufen anzeigen kann und die Lichtprojektionseinheit B (als Gerät mit höherer Abbildungsqualität) Farben anzeigen kann, so wird das Aufspalten des Ursprungsbildes $I_{HDR}$ vorzugsweise im Luminanzraum durchgeführt, während die Kompensierung im RGB-Farbraum abgewickelt wird, um die gewünschten Originalfarben und -intensitäten zu erhalten. Einzelheiten der zugrundeliegenden Zusammenhänge finden sich in der o.g. Veröffentlichung von SEETZEN et al. sowie in M. TRENTACOSTE et al., 2007, "Photometric image processing for high dynamic range displays", J. Visual Communication and Image Representation 18, 5, S. 439-451.

Falls das Bilddarstellungsmittel A Farben und die Lichtprojektionseinheit B nur Graustufen anzeigt, werden sowohl das Aufspalten als auch die Kompensierung im Luminanzraum ausgeführt. Das erste Bild $I_A$ wird vor seiner Darstellung in den RGB-Farbraum zurückkonvertiert. In diesem Fall ist nur eine Luminanzkompensierung möglich, während Farben angenähert werden und chromatische Artefakte unkompensiert bleiben.

Falls sowohl das Bilddarstellungsmittel A als auch die Lichtprojektionseinheit B nur Graustufen anzeigen, werden Aufspalten und Kompensierung im Luminanzraum ausgeführt.

Für alle zuvor genannten Techniken der Aufspaltung müssen die jeweiligen Transferfunktionen des Bilddarstellungsmittels A und der Lichtprojektionseinheit B linear sein. Neben einer Linearisierung einer Antwortfunktion (Response) der Lichtprojektionseinheits B ist dafür zunächst die Kenntnis der gesamten Transferfunktion (Farbe und Intensität) des Bilddarstellungsmittels A erforderlich, damit diese durch Fehlerkorrektur linearisiert werden kann. Während eines einmaligen Kalibrationsprozesses der Beleuchtungsvorrichtung 1 werden dafür alle möglichen Farbnuancen und Tonwerte des Bilddarstellungsmittels A gedruckt oder angezeigt und über die Kamera 4 aufgenommen. Für zum Beispiel einen 8-Bit RGB-Fotodrucker können alle $2^{24}$ Werte auf vier DIN A4 großen Farbkarten räumlich kodiert und gedruckt werden. Diese Farbkarten, die beispielsweise mit einer linearisierten hochauflösenden Kamera 4 unter uniformem weißem Projektorlicht aufgenommen werden, werden rektifiziert und indiziert. Ihre Einträge werden abgetastet, geglättet und in Lookup-Tabellen gespeichert. Zur Linearisierung wird diese Lookup-Tabelle invertiert. Mehrfacheinträge werden gemittelt und fehlende Werte innerhalb der konvexen Hülle der abgetasteten Punkte interpoliert. Fehlende Werte außerhalb der konvexen Hülle werden ihren nächsten gültigen Einträgen zugeordnet. Zu beachten ist, dass diese Lookup-Tabellen nur den Farb- und Intensitätstransfer bis auf einen Skalierungsfaktor beinhalten, während für die Transferfunktion $T_A$ in Gleichung [2] bevorzugt auch räumliche Bildtransfereffekte wie Banding und Dithering berücksichtigt werden. Diese Effekte können basierend auf bekannten Dithering- und Sampling-Funktionen berechnet werden, anstatt sie zu messen. Aus Gründen der Genauigkeit werden vorzugsweise die gesamten Lookup-Tabellen gespeichert und verwendet, anstatt einzelne Farbkanäle zu separieren und diese in einen Satz analytischer Funktionen einzusetzen, was bei geringeren Genauigkeitsanforderungen aber ebenfalls möglich wäre.

Eine vereinfachte Version der oben beschriebenen ersten Ausführungsform des erfindungsgemäßen Verfahrens lässt sich realisieren, falls die Lichtprojektionseinheit B und das Bilddarstellungsmittel A beide linear sind und die gleichen Transfereigenschaften besitzen (Tonauflösung, Auflösung, Farbraum etc.). Dann wird die zuvor beschriebene komplexe HDR-Aufspaltung des Ursprungsbildes $I_{HDR}$ und die Registrierung zwischen dem ersten Bild $I_A$ und seiner Hardcopy unnötig. In diesem Fall vereinfacht sich die Aufspaltung des Ursprungsbildes, indem das erste Bild $I_A$ erzeugt wird gemäß

$$I_A = \sqrt{\left(I_{HDR}\right)^{\gamma}} \quad . \qquad\qquad [3]$$

Eine hochaufgelöste lineare Fotografie davon wird ohne Modifikation (außer einer möglichen, aber konstanten Intensitätsskalierung, welche die f-Stop Einstellungen der Kamera 4 beachtet) als zweites Bild $I_B$ zurückprojiziert. Dies ergibt akzeptable Resultate, falls die linearisierte Kameraresponse die Bildqualität nicht signifikant reduziert. Bei dieser Ausführung ist nur eine Registrierung zwischen der Kamera 4 und der Lichtprojektionseinheit B notwendig. Diese Ausführungsform führt sogar dann zu akzeptablen Resultaten, wenn die Transfereigenschaften des Bilddarstellungsmittels A und der Lichtprojektionseinheit B nicht exakt gleich, aber doch ähnlich sind und das Bilddarstellungsmittel A eine bessere Bildqualität als die Lichtprojektionseinheit B besitzt. Bildtransfereffekte (Banding und Dithering) werden bei dieser Ausführungsform jedoch nicht kompensiert. Die vereinfachte Ausführungsform lässt sich sowohl für Farbbilder, die auf farbige Hardcopies ("*Farbe auf Farbe* ") projiziert werden, als auch für die Fälle *"Grau auf Farbe"* und *"Grau auf Grau"* anwenden. Sie schlägt aber fehl im Falle *"Farbe auf Grau".*

**Luminanzquantisierung:** Eine Abwandlung der oben beschriebenen ersten Ausführungsform der Erfindung berücksichtigt die Luminanzquantisierung hinsichtlich der nichtlinearen Reaktion des menschlichen visuellen Systems und optimiert die Bilder $I_A$, $I_B$ unter Berücksichtigung des diskreten Verhaltens des Bilddarstellungsmittels A und der Lichtprojektionseinheit B.

Die sich aus der Überlagerung der Bilder $I_A$, $I_B$ ergebende Modulation führt zu einer großen Anzahl physikalisch erzeugbarer Luminanzstufen. Wegen des nichtlinearen Verhaltens des menschlichen visuellen Systems sind jedoch nicht alle erzeugbaren Luminanzstufen von einem Betrachter perzeptiv unterscheidbar. Die Anzahl wahrnehmbarer Luminanzstufen (*Just Noticeable Difference* oder JND-Schritte) erhöht sich mit wachsender Spitzenluminanz des Displays (vgl. dazu die bereits mehrfach zitierte Arbeit von SEETZEN et al.). Da eine exakte Darstellung der Bilder mit sicher unterscheidbaren Luminanzstufen für viele professionelle Applikationen, z.B. viele medizinische Visualisierungen, essentiell ist, sollen Bilder eher in einen für die Wahrnehmung linearen JND-Raum konvertiert werden als in einem physikalisch linearen Luminanzraum präsentiert zu werden.

A. GHOSH et al., 2005, "Volume rendering for high dynamic range displays", Proc. EG/IEEE VGTC Workshop on Volume Graphics, S. 91- 231, beschreiben zum Beispiel eine für die Wahrnehmung lineare Transferfunktion für Volumenrendering auf HDR-Displays. Der technisch erzielbare Luminanzraum solcher Displays ist jedoch diskretisiert und stellt eine Herausforderung für die Quantisierung dar, da gewählte JND-Schritte unter Umständen nicht exakt erzielt werden können, weil sie keinen erzeugbaren Luminanzstufen zugeordnet werden können. Dies ist besonders dann der Fall, wenn beide Modulatoren, hier also das Bilddarstellungsmittel A und die Lichtprojektionseinheit B, unabhängig voneinander linearisiert werden, was zu einer Reduktion der Tonwerte *per se* in jedem einzelnen Kanal führt, oder eine geringe lokale Tonauflösung haben. Andererseits können viele ähnliche Luminanzstufen mit mehr als einer Modulationskombination angenähert werden. Dies führt zu der Fragestellung, wie ausgewählte JND-Schritte optimal individuellen Modulatorantworten zugeordnet werden können, so dass technisch eine maximale Anzahl möglicher JND-Schritte erreicht wird und die Kombination der Transferfunktionen beider Modulatoren, welche die ausgewählten JND-Schritte produzieren, so monoton wie möglich bleibt. Die zweite Bedingung ist wichtig, um visuelle Artefakte im Fall geringfügiger Fehlregistrierung, signifikanter Differenz in der Modulatorauflösung oder Ungenauigkeiten, die in ihren gemessenen Transferfunktionen auftreten, zu vermeiden.

Für die Darstellung von Graustufeninhalten lässt sich dieses Problem lösen durch Abtasten der reflektierten Luminanzwerte aller $2^a$ Graustufen des Bilddarstellungsmittels A (gewonnen aus der oben erläuterten Transfer-Lookuptabelle) und aller $2^b$ Graustufen der Lichtprojektionseinheit B (gewonnen aus einer Projektion auf eine flache, weiße Hardcopy). Ihre Multiplikation ergibt die korrespondierenden Luminanzwerte für alle $2^{a+b}$ Graustufenkombinationen. Die normierten Graustufen werden Graustufenkoordinaten x für das Bilddarstellungsmittel A und y für die Lichtprojektionseinheit B zugewiesen ($0 \leq x, y \leq 1$). Ziel ist es, $x = y^\sigma$ für einen zu ermittelnden Parameter $\sigma$ zu erreichen, mit der folgenden Bedingung:

$$\max\left( \left| \overset{n}{\underset{j=0}{Y}} \left\{ s_j \, \left| \min_{s_j \in C_j} (L_{s_j} - L_j) \right. \right\} \right| \right), \quad C_j = \left\{ c \, \left| \, \Delta_c < \Delta, \, L_j \leq L_c \right. \right\}. \quad [4]$$

In der Gleichung [4] indiziert $j$ einzelner JND-Schritte (mit jeweiliger Luminanz $L_j$), die von einem Blacklevel und einer Spitzenluminanz, die jeweils nach der Kalibierung bekannt sind, abgeleitet werden können.

Angewendet werden kann beispielsweise eine Luminanzquantisierungsfunktion, die in R. MANTIUK et al., 2004, "Perception-motivated high dynamic range video encoding", Proc. ACM Siggraph, vol. 23, S. 733-741; 20 oder R. MANTIUK et al., 2005, "Predicting visible differences in high dynamic range images - model and its calibration", Proc. IS&T/SPIE's Annual Symposium on Electronic Imaging, vol. 5666, S 204-214 beschrieben wurde, da sie für den hier benötigten Luminanzumfang definiert ist. Dabei ist $L_0$ äquivalent zur niedrigsten Blacklevel-Reflexion der Lichtprojektionseinheit B. Für jeden (theoretisch) möglichen JND-Schritt $j$ wird ein Satz $C_j$ von Graustufenkandidaten $c \in C_j$ gewählt, der zu reproduzierbaren Luminanzstufen $L_c$ führt, die größer oder gleich der Luminanz $L_j$ des JND-Schrittes $j$ sind und deren kürzeste $x, y$ Distanzen $\Delta_c$ zu der Funktion $x = y^\sigma$ nicht größer als ein vorgebbares Distanzmaximum $\Delta$ sind. Aus jedem Satz $C_j$ wird derjenige Kandidat $s_j \in C_j$ gewählt, der $L_j$ am besten annähert.

Das *Gleichsetzen* $x = y^\sigma$ unter Maximierung der Anzahl technisch möglicher JND-Schritte resultiert in einem optimalen Satz von Graustufen des Bilddarstellungsmittels A und der Lichtprojektionseinheitd B für jeden JND-Schritt, der die gewünschten Bedingungen erfüllt. Dies sind die Graustufen, die zu den gewählten Kandidaten $s_j \in C_j$ der JND-Schritte am optimalen Wert des Parameters $\sigma$ gehören.

Um farbige Inhalte anzuzeigen, wird die Luminanz der originalen RGB-Werte mit den jeweiligen (normierten) Graustufen skaliert, die für das Bilddarstellungsmittel A und die Lichtprojektionseinheit B ausgewählt wurden.

**Inverses Tonemapping:** In der zweiten Ausführungsform des erfindungsgemäßen Verfahrens wird der Bilddatensatz, anhand dessen die modulierte Beleuchtung des Objektes 8 ermittelt wird, aus einem mittels der Kamera 4 aufgenommenen Kamerabild des Objektes 8 gebildet und aus dem Bilddatensatz ein Beleuchtungsdatensatz zur Steuerung der Lichtprojektionseinheit erzeugt.

Dabei wird aus dem Bilddatensatz vorzugsweise zunächst mittels eines inversen Tonemappings ein Zwischenbild mit einem gegenüber dem Kamerabild erhöhten Kontrastverhältnis gebildet und dann der Beleuchtungsdatensatz aus dem Zwischenbild erzeugt. Dafür kann beispielsweise ein inverser Tonemappingoperator verwendet werden, der in der o.g. Veröffentlichung von BANTERLE et al. beschrieben wurde.

Wie bereits erwähnt, übernimmt das Zwischenbild in diesem Fall die Rolle des Ursprungsbildes $I_{HDR}$, und der Beleuchtungsdatensatz übernimmt die Rolle des zweiten Bildes $I_B$ der ersten Ausführungsform in dem Sinne, dass als Zwischenbild mittels des inversen Tonemappings ein HDR-ähnliches Bild erzeugt wird und der Beleuchtungsdatensatz aus dem Zwischenbild erzeugt und zur Steuerung der Lichtprojektionseinheit B verwendet wird.

Das Objekt 8 kann in diesem Fall ein LDR-Bild, beispielsweise eine normale Fotografie, oder anderes, insbesondere dreidimensionales Objekt, beispielsweise ein mittels eines optischen Instrumentes abzubildendes Objekt, sein.

Zur Erzeugung des Zwischenbildes wird das Objekt 8 mittels der Kamera 4 bei einer Beleuchtung mit Licht wenigstens einer vorgebbaren Referenzbeleuchtungscharakteristik aufgenommen und Reflexionswerte von dem Objekt reflektierten Lichts bei dieser Beleuchtung aufgezeichnet. Dabei werden als Referenzbeleuchtungscharakteristiken beispielsweise eine maximale und eine minimale Helligkeitseinstellung der Lichtprojektionseinheit B und/oder ein bestimmtes Beleuchtungsmuster gewählt. Aus den aufgezeichneten Reflexionswerten wird für jedes Pixel der Kamerabilder eine

maximale lokale Reflexion $I_{max}$ und eine minimale lokale Reflexion $I_{min}$ ermittelt und die ermittelten maximalen und minimalen lokalen Reflexionen $I_{max}$, $I_{min}$ werden in lokale Luminanzwerte $L_{max}$, $L_{min}$ konvertiert, aus denen ein globales Luminanzmaximum $\overline{L_{max}}$ und ein globales Luminanzminimum $L_{min}$ ermittelt wird. Aus diesen Werten werden Eingangsgrößen für das inverse Tonemapping gebildet.

Eine Alternative zur Verwendung des inverse Tonemappings ergibt sich daraus, dass aus wahrnehmungstechnischer Sicht einfache Skalierungstransformationen ähnliche Resultate wie ausgefeilte Tonemappingoperatoren hervorbringen können und sie manchmal sogar übertreffen. In A. AKYÜZ et al., 2007, "Do hdr displays support ldr content?: a psychophysical evaluation", Proc. ACM Siggraph, vol. 26, S. 38.2-38.7 wurde eine Skalierungstransformation beschrieben, die für die Anwendung des erfindungsgemäßen Verfahrens adaptiert werden kann.

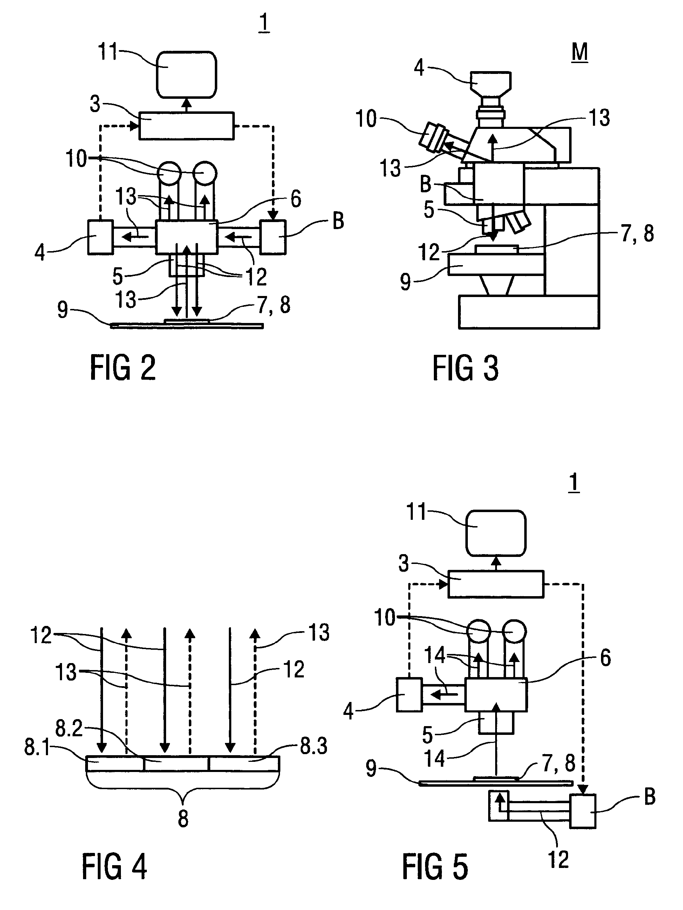

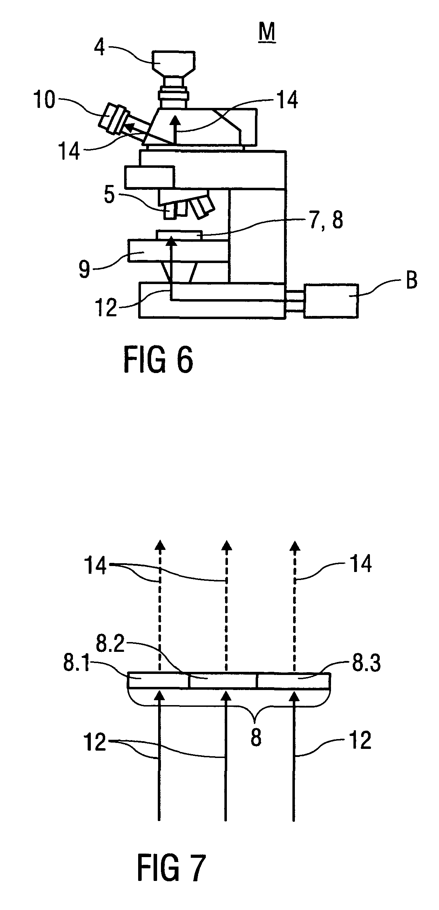

Die **Figuren 2 bis 7** zeigen Verwendungen erfindungsgemäßer Beleuchtungsvorrichtungen 1 und des erfindungsgemäßen Verfahrens in dessen zweiter Ausführungsform zur kontrastverstärkenden Beleuchtung eines Objektes 8 in einem Lichtmikroskop M. Diese Ausführungsbeispiele der Erfindung können in nahe liegender Weise Verwendungen in anderen optischen Instrumenten, beispielsweise in Endoskopen, angepasst werden.

**Figur 2** zeigt schematisch eine erfindungsgemäße Beleuchtungsvorrichtung 1 für ein Lichtmikroskop M für Auflichtmikroskopie.

**Figur 3** zeigt ein Lichtmikroskop M mit einer derartigen Beleuchtungsvorrichtung 1 für Auflichtmikroskopie.

Die Beleuchtungsvorrichtung 1 weist wiederum eine digitale Lichtprojektionseinheit B, eine Steuereinheit 3 und eine digitale Kamera 4 auf.

Eine Beleuchtungscharakteristik der Lichtprojektionseinheit B ist über die Steuereinheit 3 räumlich und zeitlich modulierbar, so dass eine Intensitätsverteilung des von der Lichtprojektionseinheit B ausgesendeten Lichts 12 mittels der Steuereinheit 3 räumlich und zeitlich veränderbar ist.

Die Lichtprojektionseinheit B ist in dem Lichtmikroskop M oberhalb von Mikroskopobjektiven 5 angeordnet, von denen wahlweise jeweils eines auf ein zu mikroskopierendes Objekt 8 ausrichtbar ist, das mittels eines Objektträgers 7 auf einem Objekttisch 9 des Lichtmikroskops M angeordnet ist.

Bevorzugt ist die Lichtprojektionseinheit B so eingestellt, dass das von ihr ausgesendete Licht 12 beim Verlassen der Lichtprojektionseinheit B zunächst auf eine unendliche Bildweite fokussiert ist, beispielsweise durch Einspeisung des von ihr ausgesendeten Lichts 12 in einen so genannten Endlosstrahlengang des Lichtmikroskops M. Dadurch braucht zur Fokussierung des Objektes 8 jeweils nur der Fokus des Mikroskops M durch Auswahl und Einstellung eines Mikroskopobjektivs 5 geändert zu werden, ohne die Lichtprojektionseinheit B oder die Kamera 4 nachfokussieren zu müssen.

Das von der Lichtprojektionseinheit B ausgesendete Licht 12 wird von einer optischen Einheit 6 des Lichtmikroskops M auf das zu mikroskopierende Objekt 8 ausgerichtet. Von dem Objekt 8 reflektiertes Licht 13, das durch das jeweils ausgewählte Mikroskopobjektiv 5 hindurch tritt, wird von der optischen Einheit 6 auf Okulare 10 des Lichtmikroskops M und die Kamera 4 aufgeteilt und diesen jeweils zugeleitet. Die Kamera 4 ist an einem oberen Kameraanschluss des Lichtmikroskops M montiert.

Die Kamera 4 erfasst durch den ihr zugeleiteten Anteil des von dem Objekt 8 reflektierten Lichts 13 Bilddaten des Objektes 8. Diese Bilddaten werden der Steuereinheit 3 zugeführt. Die Steuereinheit 3 ermittelt lokaler Kontraste dieser Bilddaten und daraus einen Beleuchtungsdatensatz zur Regelung der Beleuchtungscharakteristik der Lichtprojektionseinheit B.

Dabei wird in Bereichen, in denen die ermittelten lokalen Kontraste der Bilddaten gering sind, die Intensität des von der Lichtprojektionseinheit B ausgesendeten Lichts 12 derart verändert, dass die Änderung der Intensität der Abweichung der lokalen Kontraste von den Kontrastsollwerten entgegen wirkt.

Eine bevorzugte Ausgestaltung des erfindungsgemäßen Verfahrens sieht eine Echtzeitregelung der Beleuchtungscharakteristik der Lichtprojektionseinheit B vor. Dazu wird die Kamera 4 laufend mit der Lichtprojektionseinheit B mittels der Steuereinheit 3 synchronisiert. Eine Echtzeitregelung ist insbesondere dann vorteilhaft, wenn sich das zu mikroskopierende Objekt 8 bewegen und/oder verformen kann, da dadurch zur Kontrastregelung die momentane Position und/oder Form des Objektes 8 berücksichtigt werden kann.

In einer weiteren Ausgestaltung dieses Ausführungsbeispiels werden die von der Kamera 4 erfassten Bilddaten, gegebenenfalls nach einer von der Steuereinheit 3 vorgenommenen Bildbearbeitung, zusätzlich einem Monitor 11 zugeführt und von diesem ausgegeben. Alternativ oder zusätzlich werden auf dem Monitor 11 von der Steuereinheit 3 aus den Bilddaten ermittelte und/oder der Steuereinheit 3 zugeführte Zusatzinformationen, beispielsweise eine Ausdehnung oder Geschwindigkeit des Objektes 8, ausgegeben und/oder mittels der Lichtprojektionseinheit B auf das Objekt und/oder in seine Umgebung projiziert.

**Figur 4** zeigt schematisch eine räumlich modulierte Auflichtbeleuchtung eines zu mikroskopierenden Objektes 8 durch von der Lichtprojektionseinheit B ausgesendetes Licht 12. Dargestellt sind drei Teilbereiche 8.1, 8.2, 8.3 des Objektes 8 mit jeweils unterschiedlichen optischen Eigenschaften. Durch die Regelung der Beleuchtungscharakteristik der Lichtprojektionseinheit B mittels der Steuereinheit 3 werden die drei Teilbereiche 8.1, 8.2, 8.3 mit von der Lichtprojektionseinheit B ausgesendetem Licht 12 jeweils unterschiedlicher Intensität beleuchtet, so dass im Vergleich mit einer gleichmäßigen Beleuchtung der Teilbereiche 8.1, 8.2, 8.3 ein deutlich höherer Kontrast erzielt wird.

Die **Figuren 5 bis 7** entsprechen jeweils den Figuren 2 bis 4. Im Unterschied zu der in den Figuren 2 bis 4 dargestellten Anordnung ist die Beleuchtungsvorrichtung 1 in diesem Beispiel zur Durchlichtmikroskopie vorgesehen. Die Lichtprojektionseinheit B ist dazu unterhalb des Objekttisches 9 des Lichtmikroskops M angeordnet, beispielsweise an einem Anschluss, der üblicherweise für eine Quecksilberhochdrucklampe zur Fluoreszenzmikroskopie vorgesehen ist. Das zu mikroskopierende Objekt 8 wird von unten mit von der Lichtprojektionseinheit B ausgesendetem Licht 12 beleuchtet. Anstelle von dem Objekt 8 reflektierten Lichts 13 wird in diesem Fall durch das Objekt 8 transmittiertes Licht 14 der Kamera 4 und den Okularen 10 des Lichtmikroskops M zugeführt.

Die oben anhand der Figuren 2 bis 7 beschriebenen Ausführungsbeispiele können in verschiedener Weise weitergestaltet werden. Beispielsweise kann das Objekt 8 parallel oder sequenziell, insbesondere über verschiedene Eingänge des Lichtmikroskops M, mit mehreren Lichtprojektionseinheiten B beleuchtet werden, wobei die jeweiligen Beleuchtungen räumlich moduliert oder homogen sind.

Insbesondere kann das Objekt 8 auf diese Weise parallel oder sequenziell mit Licht verschiedener Spektralverteilungen verwenden, beispielsweise mit Licht im infraroten, ultravioletten und/oder sichtbaren Spektralbereich.

Alternativ oder zusätzlich können, beispielsweise über verschiedene Mikroskopausgänge, verschiedene Spektralanteile von dem Objekt 8 reflektierten Lichts 13 und/oder durch das Objekt 8 transmittierten Lichts 14 parallel oder sequenziell von mehreren Kameras 4, die über jeweils unterschiedliche Band-Pass-Filter verfügen, erfasst werden. Diese Spektralanteile können dann auf verschiedene Weise kombiniert und zur erfindungsgemäßen kontrastverstärkenden Beleuchtung des Objektes 8 ausgewertet werden..

Beispielsweise kann das Objekt 8 über einen ersten Mikroskopeingang mit infrarotem (IR) und/oder ultraviolettem (UV) Licht einer ersten Lichtprojektionseinheit B räumlich moduliert oder homogen beleuchtet werden. Dieses Licht wird in dem Objekt 8 moduliert und von dem Objekt 8 reflektiertes IR-und/oder UV-Licht 13 und/oder durch das Objekt 8 transmittierten IR-und/oder UV-Licht 14 wird von wenigstens einer Kamera 4 aufgenommen. Anhand der erfassten Bilddaten wird mittels einer Steuereinheit 3 eine zweite Lichtprojektionseinheit B geregelt, mittels derer das Objekt 8 über einen zweiten Mikroskopeingang mit sichtbarem Licht kontrastverstärkend beleuchtet wird.

Auf diese Weise kann die tatsächliche Beleuchtung des Objektes 8 von einer visuell durch ein Okular 10 des Lichtmikroskops M wahrnehmbaren Beleuchtung abweichen. Z.B. kann das Objekt 8 ständig homogen mit IR-und/oder UV-Licht beleuchtet werden, während ein Betrachter durch das Okular 10 eine kontrastverstärkte sichtbare Beleuchtung sieht. Diese kontrastverstärkte Beleuchtung beeinflusst nicht die IR-und/oder UV-Kameraaufnahmen, aus denen dann die kontrastverstärkende sichtbare Beleuchtung jeweils für einen späteren Zeitpunkt errechnet wird. Daher kann das Objekt 8 beispielsweise auch bewegt werden, ohne dass es zu Wechselwirkungen zwischen der IR-und/oder UV-Kameraaufnahme zu einem ersten Zeitpunkt und einer modulierten kontrastverstärkenden Beleuchtung mit sichtbarem Licht zu einem späteren zweiten Zeitpunkt kommt.

## BEZUGSZEICHENLISTE

| | |
|---|---|
| 1 | Beleuchtungsvorrichtung |
| 2 | Projektionsfläche |
| 3 | Steuereinheit |
| 4 | Kamera |
| 5 | Mikroskopobjektiv |
| 6 | optische Einheit |
| 7 | Objektträger |
| 8 | Objekt |
| 8.1 | erster Teilbereich |
| 8.2 | zweiter Teilbereich |
| 8.3 | dritter Teilbereich |
| 9 | Objekttisch |
| 10 | Okular |
| 11 | Monitor |
| 12 | ausgesendetes Licht |
| 13 | reflektiertes Licht |
| 14 | transmittiertes Licht |
| B | Lichtprojektionseinheit |
| M | Lichtmikroskop |

| | |
|---|---|
| $I_A$ | erstes Bild |
| $I_B$ | zweites Bild |
| $I_{HDR}$ | Ursprungsbild |
| $TM_{AB}$ | Tonemapping-Operator |
| $T_A$ | linearisierte Transferfunktion des Bilddarstellungsmittels |
| $a$ | Bittiefe des Bilddarstellungsmittels |
| $b$ | Bittiefe der Lichtprojektionseinheit |
| $\gamma$ | Gammakorrekturwert |
| $j$ | JND-Schritt |
| $L_j$ | Luminanz |
| $C_j$ | Satz von Graustufenkandidaten |
| $c, s_j$ | Graustufenkandidat |
| $L_c$ | Luminanzstufe |
| $x, y$ | Graustufenkoordinate |
| $\sigma$ | Parameter |
| $n$ | Anzahl von JND-Schritten |
| $\Delta_c$ | Distanz |
| $\Delta$ | Distanzmaximum |
| $I_{max}$ | maximale lokale Reflexion |
| $I_{min}$ | minimale lokale Reflexion |
| $L_{max}$ | maximaler lokaler Luminanzwert |
| $L_{min}$ | minimaler lokaler Luminanzwert |
| $L_{max}$ | globales Luminanzmaximum |
| $L_{min}$ | globales Luminanzminimum |

**Patentansprüche**

1. Verfahren zur optischen Kontrastverstärkung eines Objektes (8) durch eine räumlich und/oder zeitlich modulierte Beleuchtung des Objektes (8) mittels wenigstens einer Lichtprojektionseinheit (B), wobei die räumliche und/oder zeitliche Modulierung der Beleuchtung des Objektes (8) anhand eines dem Objekt (8) zugeordneten Bilddatensatzes bestimmt wird, **dadurch gekennzeichnet, dass** der Bilddatensatz aus einem mittels einer Kamera (4) aufgenommenen Kamerabild des Objektes (8) gebildet wird, aus dem Bilddatensatz mittels eines inversen Tonemappings ein Zwischenbild mit einem gegenüber dem Kamerabild erhöhten Kontrastverhältnis gebildet wird und aus dem Zwischenbild ein Beleuchtungsdatensatz zur Steuerung der wenigstens einen Lichtprojektionseinheit (B) erzeugt wird.

2. Verfahren nach Anspruch 1,
   **dadurch gekennzeichnet, dass** zur Erzeugung des Zwischenbildes folgende Schritte ausgeführt werden:

   fotografisches Aufnehmen des Objektes (8) bei einer Beleuchtung des Objektes (8) mit Licht wenigstens einer vorgebbaren Referenzbeleuchtungscharakteristik mittels der wenigstens einen Lichtprojektionseinheit (B) und Aufzeichnen von Reflexionswerten von dem Objekt (8) reflektierten Lichts bei dieser Beleuchtung;
   Feststellen einer maximalen lokalen Reflexion ($I_{max}$) und einer minimalen lokalen Reflexion ($I_{min}$) an verschiedenen Punkten des Kamerabildes;
   Konvertieren der maximalen lokalen Reflexionen ($I_{max}$) und der minimalen lokalen Reflexionen ($I_{min}$) in lokale Luminanzwerte ($L_{max}$, $L_{min}$);
   Bestimmen des globalen Maximums ($\overline{L_{max}}$) und des globalen Minimums ($\overline{L_{min}}$) der ermittelten Luminanzwerte ($L_{max}$, $L_{min}$).

3. Verfahren nach einem der Ansprüche 1 oder 2,
   **dadurch gekennzeichnet, dass** aus dem Bilddatensatz lokale Kontrastwerte ermittelt werden und in als kontrastarm erkannten Teilbereichen (8.1, 8.2, 8.3) des Objektes (8) Kontraste durch eine Regelung der Beleuchtungscharakteristik der wenigstens einen Lichtprojektionseinheit (B) anhand des Beleuchtungsdatensatzes lokal erhöht werden.

4. Verfahren nach einem der Ansprüche 1 bis 3,
   **dadurch gekennzeichnet, dass** aus dem Bilddatensatz Bildparameter zur Erkennung von durch Lichtreflexion an dem Objekt (8) erzeugten Glanzlichtern ermittelt werden und erkannten Glanzlichtern durch die Regelung der Beleuchtungscharakteristik der wenigstens einen Lichtprojektionseinheit (B) entgegengewirkt wird.

5. Verfahren nach einem der Ansprüche 1 bis 4,
   **dadurch gekennzeichnet, dass** aus dem Bilddatensatz Bildparameter zur Erkennung von Volumenstreuungen von von der wenigstens einen Lichtprojektionseinheit (B) ausgesendetem Licht (12) innerhalb des Objektes (8) ermittelt werden und erkannten Volumenstreuungen durch die Regelung der Beleuchtungscharakteristik der wenigstens einen Lichtprojektionseinheit (B) entgegengewirkt wird.

6. Verfahren nach einem der Ansprüche 1 bis 5,
   **dadurch gekennzeichnet,**
   **dass** die Kamera (4) in einen Strahlengang von der wenigstens einen Lichtprojektionseinheit (B) ausgesendeten Lichts (12) derart angeordnet wird, dass sie von dem Objekt (8) reflektiertes Licht (13) empfängt.

7. Verfahren nach einem der Ansprüche 1 bis 6,
   **dadurch gekennzeichnet,**
   **dass** die Kamera (4) in einen Strahlengang von der wenigstens einen Lichtprojektionseinheit (B) ausgesendeten Lichts (12) derart angeordnet wird, dass sie durch das Objekt (8) transmittiertes Licht (14) empfängt.

8. Verfahren nach einem der Ansprüche 1 bis 7,
   **dadurch gekennzeichnet, dass** als Beleuchtungsdatensatz ein zweites Bild ($I_B$) des Objektes (8) ermittelt wird und das zweite Bild ($I_B$) deckungsgleich auf das Objekt (8) projiziert wird.

9. Beleuchtungsvorrichtung (1) zur optischen Kontrastverstärkung eines Objektes (8), umfassend wenigstens eine Lichtprojektionseinheit (B), deren Beleuchtungscharakteristik räumlich und/oder zeitlich modulierbar ist, eine Steuereinheit (3) zur Modulierung der Beleuchtungscharakteristik der wenigstens einen Lichtprojektionseinheit (B) anhand eines dem Objekt (8) zugeordneten Bilddatensatzes **dadurch gekennzeichnet, dass** die Beleuchtungsvorrichtung eine an die Steuereinheit (3) gekoppelte Kamera (4) umfasst, mittels derer ein Kamerabild des Objektes (8) zur Bildung des Bilddatensatzes aufnehmbar ist, wobei die Steuereinheit (3) ausgebildet ist, aus dem Bilddatensatz mittels eines inversen Tonemappings ein Zwischenbild mit einem gegenüber dem Kamerabild erhöhten Kontrastverhältnis und aus dem Zwischenbild ein Beleuchtungsdatensatz zur Steuerung der wenigstens einen Lichtprojektionseinheit (B) zu erzeugen.

10. Beleuchtungsvorrichtung (1) nach Anspruch 9,
    **dadurch gekennzeichnet, dass** die Kamera (4) in einem Strahlengang von der wenigstens einen Lichtprojektionseinheit (B) ausgesendeten Lichts (12) derart angeordnet ist, dass sie von dem Objekt (8) reflektiertes Licht (13) empfängt.

11. Beleuchtungsvorrichtung (1) nach Anspruch 9 oder 10,
    **dadurch gekennzeichnet, dass** die Kamera (4) in einem Strahlengang von der wenigstens einen Lichtprojektionseinheit (B) ausgesendeten Lichts (12) derart angeordnet ist, dass sie durch das Objekt (8) transmittiertes Licht (14) empfängt.

12. Verwendung einer Beleuchtungsvorrichtung (1) gemäß einem der Ansprüche 9 bis 11 in einem optischen Instrument zur kontrastverstärkenden Beleuchtung eines mit dem optischen Instrument abzubildenden Objektes (8).

13. Verwendung einer Beleuchtungsvorrichtung (1) nach Anspruch 12,
    **dadurch gekennzeichnet, dass** das optische Instrument ein Lichtmikroskop (M) oder ein Endoskop ist.

**Claims**

1. Method for optical contrast enhancement of an object (8) by spatially and/or temporally modulated illumination of the object (8) by means of at least one light projection unit (B), the spatial and/or temporal modulation of the illumination of the object (8) being determined with the aid of an image data record assigned to the object (8), **characterized in that** the image data record is formed from a camera image of the object (8) recorded by means of a camera (4), by means of an inverse tone mapping an intermediate image with a contrast ratio higher than the camera image is formed from the image data record, and an illumination data record is produced from the intermediate image in order to control the at least one light projection unit (B).

2. Method according to Claim 1, **characterized in that** the following steps are executed to produce the intermediate image:

photographic recording of the object (8), given illumination of the object (8) with light of at least one prescribable reference illumination characteristic, by means of the at least one light projection unit (B), and registering reflection values of light reflected by the object (8) during said illumination;
determining a maximum local reflection ($I_{max}$) and a minimum local reflection ($I_{min}$) at various points of the camera image;
converting the maximum local reflections ($I_{max}$) and the minimum local reflections ($I_{min}$) into local luminance values ($L_{max}$, $L_{min}$) ; and
determining the global maximum ($\overline{L_{max}}$) and the global minimum ($\overline{L_{min}}$) of the determined luminance values ($L_{max}$, $L_{min}$).

3. Method according to either of Claims 1 and 2, **characterized in that** local contrast values are determined from the image data record and, in subareas (8.1, 8.2, 8.3) of the object (8) detected as low-contrast, contrasts are locally increased with the aid of the illumination data record by regulating the illumination characteristic of the at least one light projection unit (B).

4. Method according to one of Claims 1 to 3, **characterized in that** image parameters are determined from the image data record in order to detect highlights produced by light reflection at the object (8), and detected highlights are counteracted by regulating the illumination characteristic of the at least one light projection unit (B).

5. Method according to one of Claims 1 to 4, **characterized in that** image parameters are determined from the image data record in order to detect volumetric scatterings of light (12), emitted by the at least one light projection unit (B), inside the object (8), and detected volumetric scatterings are counteracted by regulating the illumination characteristic of the at least one light projection unit (B).

6. Method according to one of Claims 1 to 5, **characterized in that** the camera (4) is arranged in a beam path of the light (12) emitted by the at least one light projection unit (B) in such a way that it receives light (13) reflected by the object (8).

7. Method according to one of Claims 1 to 6, **characterized in that** the camera (4) is arranged in a beam path of the light (12) emitted by the at least one light projection unit (B) in such a way that it receives light (14) transmitted through the object (8).

8. Method according to one of Claims 1 to 7, **characterized in that** a second image ($I_B$) of the object (8) is determined as illumination data record, and the second image ($I_B$) is projected congruently onto the object (8).

9. Illumination device (1) for optical contrast enhancement of an object (8), comprising at least one light projection unit (B) whose illumination characteristic can be modulated spatially and/or temporally, a control unit (3) for modulating the illumination characteristic of the at least one light projection unit (B) with the aid of an image data record assigned to the object (8), **characterized in that** the illumination device comprises a camera (4) which is coupled to the control unit (3) and can be used to record a camera image of the object (8) in order to form the image data record, the control unit (3) being configured to produce from the image data record by means of an inverse tone mapping an intermediate image with a contrast ratio higher than the camera image, and to produce an illumination data record from the intermediate image in order to control the at least one light projection unit (B).

10. Illumination device (1) according to Claim 9, **characterized in that** the camera (4) is arranged in a beam path of the light (12) emitted by the at least one light projection unit (B) in such a way that it receives light (13) reflected by the object (8).

11. Illumination device (1) according to Claim 9 or 10, **characterized in that** the camera (4) is arranged in a beam path of the light (12) emitted by the at least one light projection unit (B) in such a way that it receives light (14) transmitted through the object (8).

**12.** Use of an illumination device (1) according to one of Claims 9 to 11 in an optical instrument for the contrast-enhancing illumination of an object (8) to be imaged by the optical instrument.

**13.** Use of an illumination device (1) according to Claim 12, **characterized in that** the optical instrument is an optical microscope (M) or an endoscope.


**Revendications**

**1.** Procédé de renforcement optique du contraste d'un objet (8) en éclairant de manière modulée spatialement et/ou temporellement l'objet (8) au moyen d'au moins une unité (B) de projection de lumière, la modulation spatiale et/ou temporelle de l'éclairage de l'objet (8) étant définie à l'aide d'un jeu de données d'image associé à l'objet (8), **caractérisé en ce que** le jeu de données d'image est formé d'une image caméra de l'objet (8) enregistrée au moyen d'une caméra (4), **en ce qu'**une image intermédiaire qui présente un rapport de contraste plus élevé que celui de l'image de la caméra est formée à partir du jeu de données d'image au moyen d'une cartographie inversée des tonalités et **en ce qu'**un jeu de données d'éclairage est formé à partir de l'image intermédiaire pour commander la ou les unités (B) de projection de lumière.

**2.** Procédé selon la revendication 1, **caractérisé en ce que** les étapes suivantes sont exécutées pour former l'image intermédiaire :

enregistrement photographique de l'objet (8) en éclairant l'objet (8) par une lumière qui présente au moins une caractéristique prédéterminable d'éclairage de référence au moyen de la ou des unités (B) de projection de lumière et attribution de valeurs de réflexion de la lumière réfléchie par l'objet (8) pour cet éclairage, définition d'une réflexion locale maximale ($I_{max}$) et d'une réflexion locale minimale ($I_{min}$) en différents points de l'image de la caméra, conversion des réflexions locales maximales ($I_{max}$) et des réflexions locales minimales ($I_{min}$) en valeurs locales de luminance ($L_{max}$, $L_{min}$) et détermination du maximum global ($\overline{L_{max}}$) et du minimum global ($\overline{L_{min}}$) des valeurs de luminance ($L_{max}$, $L_{min}$) ainsi déterminées.

**3.** Procédé selon l'une des revendications 1 ou 2, **caractérisé en ce que** des valeurs locales de contraste sont déterminées à partir du jeu de données d'image et **en ce que** dans les parties (8.1, 8.2, 8.3) de l'objet (8) détectées comme à faible contraste, les contrastes sont augmentés localement à l'aide du jeu de données d'éclairage par régulation de la caractéristique d'éclairage de la ou des unités (B) de projection de lumière.

**4.** Procédé selon l'une des revendications 1 à 3, **caractérisé en ce que** des paramètres d'image sont déterminés à partir du jeu de données d'image pour détecter des points brillants formés par réflexion de lumière sur l'objet (8), les points brillants détectés étant compensés par la caractéristique d'éclairage de la ou des unités (B) de projection de lumière.

**5.** Procédé selon l'une des revendications 1 à 4, **caractérisé en ce que** des paramètres d'image sont déterminés à partir du jeu de données d'image pour détecter à l'intérieur de l'objet (8) des dispersions de volume de la lumière (12) émise par la ou les unités (B) de projection de lumière et **en ce que** les dispersions de volume ainsi détectées sont compensées par la régulation de la caractéristique d'éclairage de la ou des unités (B) de projection de lumière.

**6.** Procédé selon l'une des revendications 1 à 5, **caractérisé en ce que** la caméra (4) est disposée dans un parcours de rayon de la lumière (12) émise par la ou les unités (B) de projection de lumière de telle sorte qu'elle reçoive la lumière (13) réfléchie par l'objet (8).

**7.** Procédé selon l'une des revendications 1 à 6, **caractérisé en ce que** la caméra (4) est disposée dans un parcours de rayon de la lumière (12) émise par la ou les unités (B) de projection de lumière de telle sorte qu'elle reçoive la lumière (14) transmise à travers l'objet (8).

**8.** Procédé selon l'une des revendications 1 à 7, **caractérisé en ce qu'**une deuxième image ($I_B$) de l'objet (8) est déterminée comme jeu de données d'éclairage et **en ce que** la deuxième image ($I_B$) est projetée de manière à se superposer à l'objet (8).

9. Dispositif d'éclairage (1) destiné à renforce optiquement le contraste d'un objet (8) et comprenant au moins une unité (B) de projection de lumière dont la caractéristique d'éclairage peut être modulée spatialement et/ou temporellement et une unité de commande (3) qui module la caractéristique d'éclairage de la ou des unités (B) de projection de lumière à l'aide d'un jeu de données d'image associé à l'objet (8), **caractérisé en ce que** le dispositif d'éclairage comporte une caméra (4) couplée à l'unité de commande (3) et au moyen de laquelle une image caméra de l'objet (8) peut être enregistrée pour former le jeu de données d'image, **en ce que** l'unité de commande (3) est configurée pour former une image intermédiaire qui présente un rapport de contraste plus élevé que celui de l'image de la caméra à partir du jeu de données d'image, au moyen d'une cartographie inversée des tonalités et pour former un jeu de données d'éclairage à partir de l'image intermédiaire pour commander la ou les unités (B) de projection de lumière.

10. Dispositif d'éclairage (1) selon la revendication 9, **caractérisé en ce que** la caméra (4) est disposée dans un parcours de rayon de la lumière (12) émise par la ou les unités (B) de projection de lumière de telle sorte qu'elle reçoive la lumière (13) réfléchie par l'objet (8).

11. Dispositif d'éclairage (1) selon les revendications 9 ou 10, **caractérisé en ce que** la caméra (4) est disposée dans un parcours de rayon de la lumière (12) émise par la ou les unités (B) de projection de lumière de telle sorte qu'elle reçoive la lumière (14) transmise à travers l'objet (8).

12. Utilisation d'un dispositif d'éclairage (1) selon l'une des revendications 9 à 11 dans un instrument optique en vue d'éclairer avec renforcement du contraste un objet (8) dont l'image doit être formée à l'aide de l'instrument optique.

13. Utilisation d'un dispositif d'éclairage (1) selon la revendication 12, **caractérisé en ce que** l'instrument optique est un microscope optique (M) ou un endoscope.

FIG 1

FIG 2

FIG 3

FIG 4

FIG 5

M

4

10

14

14

5

7, 8

9

12

B

## FIG 6

14

14

8.2

8.1

8.3

12

8

12

## FIG 7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19644662 C2
- US 6600598 B
- US 20070025717 A1
- WO 03016998 A1
- US 20040196550 A1


**In der Beschreibung aufgeführte Nicht-Patentliteratur**

- **P. LEDDA et al.** A wide field, high dynamic range, stereographic viewer. *Proc. Conference on Computer Graphics and Interactive Techniques,* 2003, 237-244
- **H. SEETZEN et al.** High dynamic range display systems. *Proc. ACM Siggraph,* 2004, 760-768
- **F. BANTERLE et al.** Inverse tone mapping. *Proc. Conference on Computer Graphics and Interactive Techniques in Australasia and Southeast Asia,* 2006, 349-356
- **P. SEN et al.** Dual Photography. *ACM Trans. Graph.,* vol. 24 (3), 745-755
- **V. LEPETIT et al.** Keypoint recognition using randomized trees. *IEEE Trans. on Pattern Analysis Machine Intelligence,* 2006, vol. 28 (9), 1465-1479
- **M. BROWN et al.** Camera Based Calibration Techniques for Seamless Multi-Projector Displays. *IEEE Trans. on Visualization and Computer Graphics,* 2005, vol. 11 (2), 193-5 206
- **O. BIMBER et al.** The Visual Computing of Projector-Camera Systems. *Proc. Eurographics (State-of-the-Art Report),* 2007, 23-46
- **M. TRENTACOSTE et al.** Photometric image processing for high dynamic range displays. *J. Visual Communication and Image Representation,* 2007, vol. 18 (5), 439-451
- **A. GHOSH et al.** Volume rendering for high dynamic range displays. *Proc. EG/IEEE VGTC Workshop on Volume Graphics,* 2005, 91-231
- **R. MANTIUK et al.** Perception-motivated high dynamic range video encoding. *Proc. ACM Siggraph,* 2004, vol. 23, 733-741
- **R. MANTIUK et al.** Predicting visible differences in high dynamic range images - model and its calibration. *Proc. IS&T/SPIE's Annual Symposium on Electronic Imaging,* 2005, vol. 5666, 204-214
- **A. AKYÜZ et al.** Do hdr displays support ldr content?: a psychophysical evaluation. *Proc. ACM Siggraph,* 2007, vol. 26, 38.2-38.7